Europäisches Patentamt

(19) European Patent Office

Office européen des brevets

(11) Publication number: **0 128 747**
A2

(12) # EUROPEAN PATENT APPLICATION

(21) Application number: **84303855.5**

(22) Date of filing: **07.06.84**

(51) Int. Cl.³: **F 16 C 17/03**

(30) Priority: **09.06.83 US 502573**

(43) Date of publication of application: **19.12.84**
Bulletin 84/51

(84) Designated Contracting States: **DE FR GB IT SE**

(71) Applicant: **AUTOMOTIVE ENGINE ASSOCIATES,**
**301 South Blount Street, Madison Wisconsin 53703 (US)**

(72) Inventor: **Showalter, Merle Robert, 301 South Blount**
**Street, Madison Wisconsin 53703 (US)**

(74) Representative: **Boydell, John Christopher et al,**
**Stevens, Hewlett & Perkins 5 Quality Court Chancery**
**Lane, London, WC2A 1HZ (GB)**

(54) **Superposition of pivoted pad slider bearing and squeeze film fluid mechanics for heavily cyclically loaded machine elements.**

(57) For bearings subject to fully reversing cyclic loads in service, low friction and high load capacity can be achieved with a very strong pivoted pad bearing structure designed for large squeeze film effects in addition to the steady state pivoted pad slider film forming effects. The invention consists of the combination of (1) a pivoted pad slider bearing capable, because of either stiffness or elastic characteristics, of maintaining proper geometry between the film-forming sliding surfaces under peak loads; (2) a mechanical setting where the pivoted pad is subject to fully reversing cyclic loads; (3) spacing of parts so that there is room for an enlarged clearance between the pad sliding surface and the surface against which the pad slides during load reversal and (4) means to assure flooded lubrication conditions so that a relatively thick oil film is established between the sliding surfaces on each load reversal. With these conditions met, squeeze film effects increase film thickness and reduce friction in cyclically loaded service.

# SUPERPOSITION OF PIVOTED PAD SLIDER BEARING AND SQUEEZE FILM FLUID MECHANICS FOR HEAVILY CYCLICALLY LOADED MACHINE ELEMENTS

## BACKGROUND AND OBJECTS

It is the purpose of the present invention to provide bearings capable of sustaining very heavy loads with thicker oil films and lower friction than is currently possible for cyclically loaded machinery. This is accomplished by the combination of squeeze film fluid mechanics with pivoted pad slider bearing fluid mechanics in assemblies rigid enough to take heavy loads.

Provision of bearings capable of taking very heavy loads safely and with low friction is an important problem in general machine design. Particularly it is desirable to reduce total friction in engines and also desirable to build bearing assemblies capable of bearing heavy loads at lower engine speeds than are now safe. Current engines, because of load capacity limits of the bearings, cannot be heavily loaded at low speeds. Significant improvements in fuel economy would be possible by regearing of vehicle drive trains if bearing assemblies with higher load capacity were available.

The basic theory of full film lubrication is old and well formed, and the idea of squeeze film fluid mechanics is not new. The idea of pivoted pad slider bearings is also old, and pivoted pad slider bearings (operating with low loads per unit area) have been successfully operational since before World War I. However, support structures permitting pivoted pad slider bearings to bear heavy loads have been unavailable. With careful attention to structural issues and geometrical issues related to oil film fluid mechanics, it is possible to build bearings for cyclically loaded machinery capable of taking very heavy loads with thick oil films and low friction. This is made possible by careful application of results from squeeze film fluid mechanics theory, the hydrodynamic theory of pivoted pad slider bearings, and the theory of elasticity relevant to deformations under heavy loads.

The invention consists of the combination of (1) a pivoted pad slider bearing capable, because of either stiffness or elastic characteristics, of maintaining proper geometry between the film-forming sliding surfaces under peak operating loads; (2) a mechanical setting where the pivoted pad is subject to fully reversing cyclic loads; (3) bearing tolerances so that there is room to establish an enlarged clearance between the pad sliding surface and the surface against which the pad slides during load reversal; and (4) means to assure flooded conditions so a thick oil film is established in the clearance between the sliding surfaces on each load reversal.

Bearing assemblies which meet the above conditions have much higher load capacity and significantly lower friction than current art bearings applied to cyclically loaded machinery.

### Background Theory

#### Squeeze Films

The most direct introduction to the issues relevant to the present design is via squeeze film fluid mechanics. An excellent introduction and statement of background information is possible by quoting directly from the introduction to Dudley D. Fuller's Chapter 4, "Hydrostatic Squeeze Films" from his Theory and Practice of Lubrication For Engineers, John Wiley and Sons, 1956:

" Many types of machines produce pulsating or reciprocating loads on bearings and bearing surfaces on which, because of high pressure and lack of continuous sliding or turning motion, oil film breakdown and relatively severe wear are to be expected. Strangely enough this wear does not always appear. Crossheads, piston pin-type bearings and knuckle-joint bearings may show remarkable freedom from metal to metal contact. Apparently, when conditions are favorable, an oil film is maintained between the contacting surfaces even though the relative motion of these surfaces becomes momentarily zero.

This load-carrying phenomenom arises from the fact that a viscous lubricant cannot be instantaneously squeezed out from between two surfaces that are approaching each other. It takes time for these surfaces to meet and during that interval, because of the lubricant's resistance to extrusion, a pressure is built up and the load is actually supported by the oil film. If the load is applied for a short enough period, it may happen that the two surfaces will not meet at all.

When the load is relieved or becomes reversed, the oil film often can recover its thickness in time for the next application, if the bearing has been designed to permit and assist this buildup. Indiscriminate location of oil holes, oil grooves, and reliefs may interfere with the restoration of the oil film and destroy the major part of its load-carrying capacity.

For some years dynamically loaded bearings on which the load alternates or rotates have been the subject of much interest, conjecture, and research. The most important of these are the bearings in aircraft and automotive engines. It is recognized that under certain conditions these bearings will safely carry greater loads than those predicted by the classical bearing theory based on the concept of a load acting only in one direction. It is now agreed that the difference between the characteristics of undirectionally bearings and those with the rotating or reciprocating load is related to the ability of the bearing surfaces to support a load when there is no relative sliding velocity."

Professor Fuller's chapter on hydrostatic squeeze films is excellent. Another reference on squeeze films which will be referred to in this case is Frank R. Archibald's article "Squeeze Films" (Chapter 7) in the Standard Handbook of Lubrication Engineering, O'Connor and Boyd, editors, McGraw-Hill Book Company, 1968. This chapter on squeeze films has a number of equations which will be used in this case.

The magnitude of the squeeze film effect varies greatly with changes in the geometry of the approaching surfaces, and the geometric effects are exactly calculable for simple cases (and always calculable using the calculus if geometry and viscosity are known). A sense of the critical nature of the squeeze film effect can be gotten by looking at the equations for the squeeze film effect for planar surfaces. For planar surfaces approaching each other, the formulas for resistance force W and time to collapse a set distance under a set load $\triangle t$ have the general formulas:

$$W = \frac{k_1 \, \mu D^4}{h^3} \frac{dh}{dt} \quad \text{and} \quad t = \frac{k_2 \, \mu D^4}{W} \frac{1}{(h_2)^2} - \frac{1}{(h_1)^2}$$

(where $\mu$ is viscosity, W is resisting force, $\triangle t$ is time to collapse the film from film thickness $h_2$ to $h_1$, $k_1$ and $k_2$ are geometrical coefficients, h is film thickness, $h_2$ is film thickness at $t_2$, and $h_1$ is film thickness at $t_1$).

It is vital to point out that the above equations are extremely nonlinear. The resisting force produced by the squeeze film as the parallel plates approach is inversely proportional to the cube of the oil film thickness. This means that a tenfold reduction in the oil film thickness produces a thousandfold increase in the resistance to approach of the two parallel surfaces for a set approach velocity. The strength of the squeeze film is also very nonlinear with respect to the characteristic scale dimension of the parallel surfaces. If the parallel surfaces are circles or squares, or geometrically similar rectangles, a factor of two increase in scale dimension (a factor of two in radius or a factor of two in the side length of the square) quadruples area but multiplies force W by a factor of sixteen. Because of the nonlinear nature of the squeeze film equations, issues of fine geometrical detail are quite important in the design of bearings from a squeeze film point of view.

The fineness of the geometrical details which determine the reacting forces of a squeeze film are determined in proportion to the thickness of the squeeze film itself. In practical cases the thickness of the squeeze film will often be as little as $10^{-4}$ inches, so that issues of geometrical matching between surfaces which would be considered trivial for almost any other purpose are important with respect to the strength of squeeze film fluid mechanical effects. Matters of geometry on this fine scale are also quite important with respect to the fluid mechanics covering pivoted pad slider bearings under heavy loads.

Squeeze film fluid mechanics is not limited to the fluid mechanics between two approaching planar surfaces. The interacting surfaces in a squeeze film situation can both be curved. However, the match in radius of curvature between two approaching surfaces supporting and restricting a squeeze film greatly affects the strength of the squeeze film and the minimum film thickness which will occur under a given load-time application.

In this regard the relation between a conventional partial journal bearing and its journal is important. The mathematics of this case is worked out in Archibald's chapter on squeeze films in the Standard Handbook of Lubrication Engineering. Particularly for the thin oil films which happen with heavy bearing loads, the match in radius of curvature between journal and journal bearing has a very large effect on the squeeze film forces which can be supported. The journal to journal bearing radius match matters because the width of arc where the bulk of the squeeze film forces occur between journal and bearing becomes a progressively shorter arc as the journal approaches the bearing more and more closely. For a journal bearing in squeeze film mode, the squeeze film strength is inversely proportional to the cube of the radius of curvature difference between journal and journal bearing. For a partial journal bearing (for instance a journal bearing involving a $60^\circ$ arc) it is desirable from the squeeze film point of view to have the radius of curvature of the journal and the radius of curvature of the journal bearing match nearly exactly. Ideally the journal bearing radius should be greater than the journal shaft radius by the thickness of the minimum squeeze film thickness expected. Even better is the case where the journal bearing structure is shaped so that it deforms to maintain nearly constant film thickness between itself and the journal as the squeeze film loads are applied. An elastic pivoted pad slider which does this is disclosed in the present case.

With respect to matching of radii of curvature between a journal and a partial journal bearing it should be pointed out that with a partial bearing the bearing can be provided with clearance for journal movement. This clearance provides room for the build up of thick and consequently low friction oil films. Under conditions of cyclically reversing loading, there is also time to build up thick oil films to take advantage of squeeze film fluid mechanics effects when this clearance is provided.

The Pivoted Pad Slider Bearing

Squeeze film effects are very useful dynamically, but squeeze films do not bear load under steady-state loading conditions. It is therefore desirable to have a bearing arrangement which functions dynamically in squeeze film mode, but which is capable of efficiently supporting loads which are applied for periods of time long enough to make steady state considerations relevant. It is well known that the optimal hydrodynamic bearing for steady-state loading from the viewpoint of friction and film thickness is the pivoted pad slider bearing. The pivoted pad slider bearing is old and well analyzed and understood. An excellent description of the bearing and design details relevant to it is included in Chapter 5 of the Standard Handbook of Lubrication Engineering in a chapter by Raimondi, Boyd and Kaufmann. In this chapter it is shown that pivoted pad slider bearings do best under conditions where the radius of curvature of the bearing in relation to the surface against which it slides match very closely.

In Figure 30 of this chapter is shown analysis demonstrating that the match of radius of curvature between the sliding surfaces needs to be extraordinarily close. It should be noted that this requirement for matched radii of curvature is consistent with the surface interactions that are required for squeeze film fluid mechanics. It should also be noted that the pivoting aspect of a pivoted pad slider bearing arranges the pivoting surface to rotate until a moment balance is maintained about the pivot. This is not only useful for the pivoted pad slider per se, it is also exactly what is needed to arrange that the surfaces interacting in squeeze film mode are properly positioned with respect to each other so as to maximize squeeze film forces.

It is important to mention that the heavy load-bearing capacity of pivoted pad slider bearings required for the present invention's purpose requires that the pivoted pad slider bearing assembly itself be much more rigid and strong than prior art pivot assemblies. A number of pivoted pad slider squeeze film surface supports which are capable of bearing heavy loads are disclosed in the present case. These bearing supports involve important issues of structural analysis. Two pivoted pad bearing types which have the required elastic characteristics and load bearing capacity are described in copending applications "Hydrostatically Supported Pivoted Pad Slider Bearing With Very High Load Bearing Capacity" application S.N. 502,468 and "Elastomerically Supported Pivoted Pad Bearing" application S.N. 502,577.

Summary

Using a marriage of pivoted pad slider film theory, squeeze film fluid mechanical theory, and elasticity theory, the present invention shows how to build bearings with much higher load capacity and significantly lower friction than current bearings for cyclic loading conditions.

A number of species are included to more fully explain the invention and demonstrate its generality. These include a stamping press connecting rod for heavily loaded industrial machinery, a connecting rod for reciprocating piston engines embodying a pivoted pad slider supported on a hydrostatic film, an elastomerically supported main bearing cap assembly which permits the superposition of squeeze film and pivoted pad slider fluid mechanics in a practical main bearing and a piston skirt design which uses both pivoted pad slider and squeeze film fluid mechanics.

In each of these designs the structural and bearing interactions are clear enough that the total function of the bearings can be treated analytically.

IN THE DRAWINGS

Figures 1, 2 and 3 illustrate an engine connecting rod where the main compressive load between the wrist pin and big end bearing centers is taken on a hydrostatically supported pivoted pad slider bearing which operates with superposition of squeeze film and pivoted pad slider fluid mechanics.

Figure 1 is a view of the connecting rod along the journal axis showing the hydrostatically supported direct compression pad.

Figure 2 is a side view of the connecting rod perpendicular to the journal axis.

Figure 3 is a view along the Figure 3 sectional lines of Figure 1 further illustrating the hydrostatically supported direct compression pad and the oil reservoir clearances which assure oil film replenishment during load reversals.

Figures 4, 5 and 6 further illustrate the oil pressure distribution passages and geometry of a hydrostatically supported pivoted pad such as that shown in Figures 1 and 3.

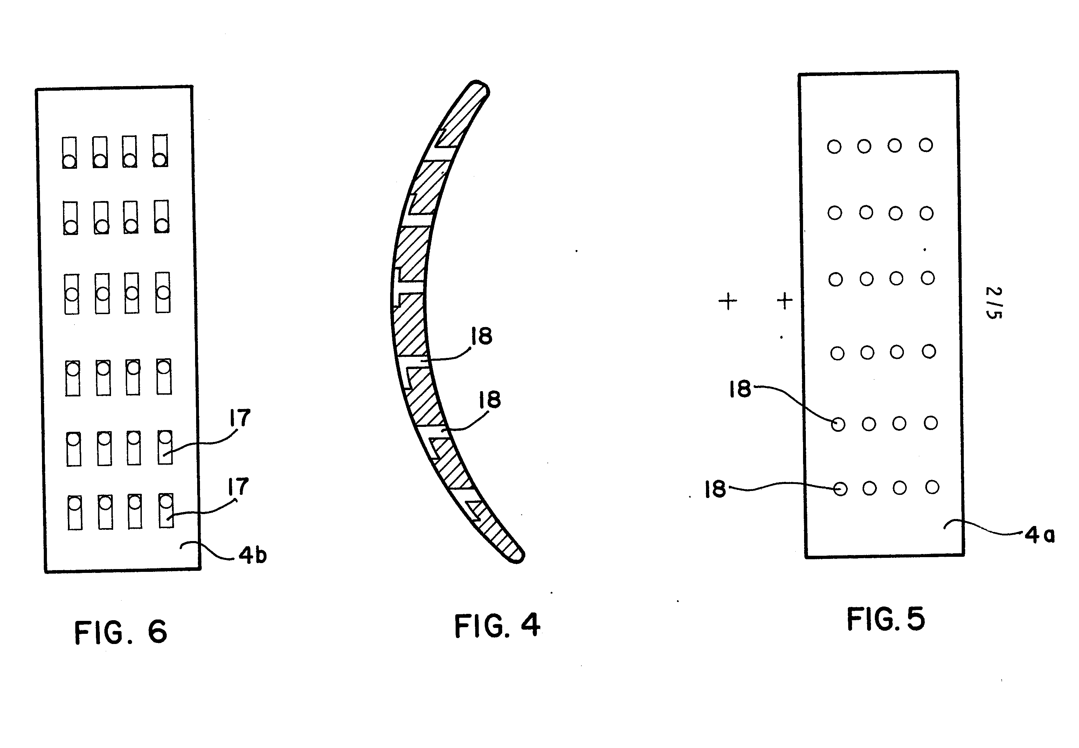

Figure 4 shows a central cross sectional view of a hydrostatically supported pad.

Figure 5 shows the pressure pickup holes on the wedge film contacting side of the pad of Figure 4.

Figure 6 shows the pressure distribution holes and notches on the hydrostatic film side of the pad of Figure 4. These holes and notches produce a hydrostatic film pressure distribution which assures hydrostatic film stability, but produces only moderate bending stresses on the pad.

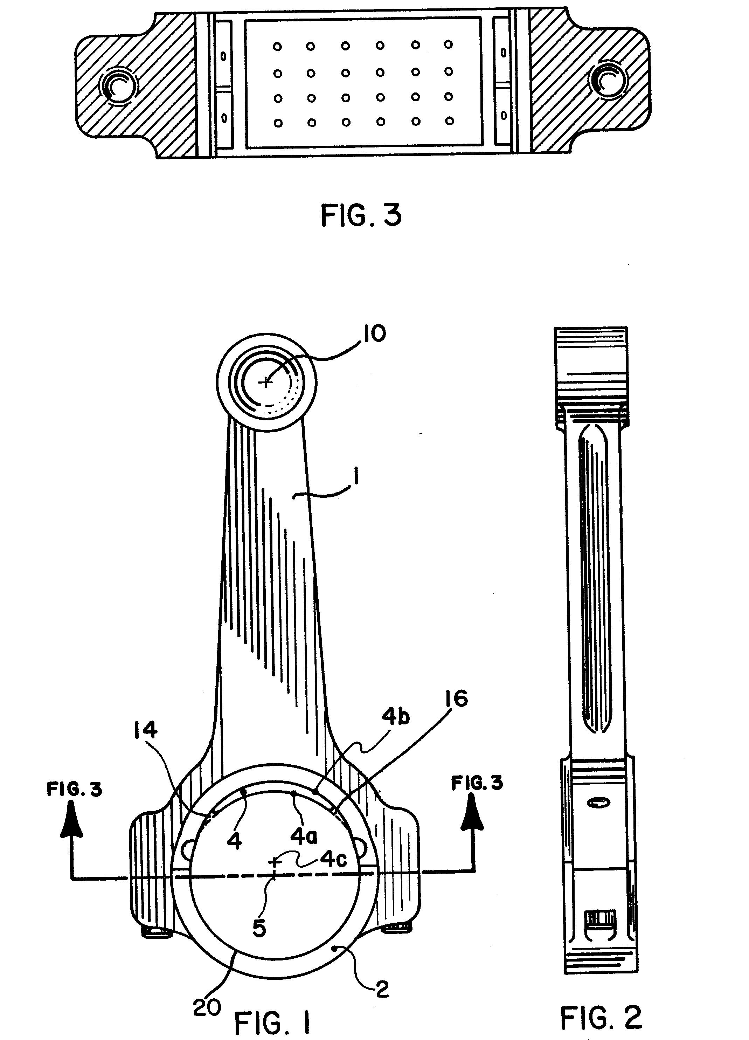

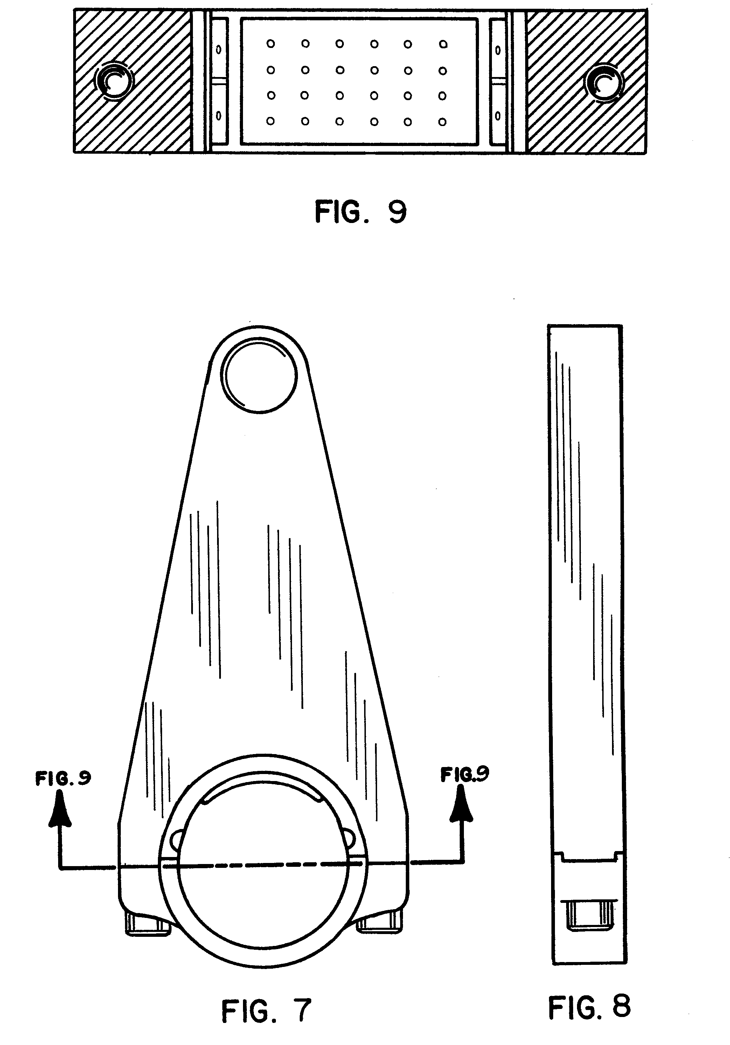

Figures 7, 8 and 9 illustrate a large connecting rod assembly analogous to that of Figures 1 to 3, but designed for a forging or metal stamping application. For such large-scale applications, squeeze film fluid mechanics can enormously increase load bearing capacity and reduce friction.

Figure 7 is a view analogous to Figure 1.

Figure 8 is a view analogous to Figure 2.

Figure 9 is a view analogous to Figure 3.

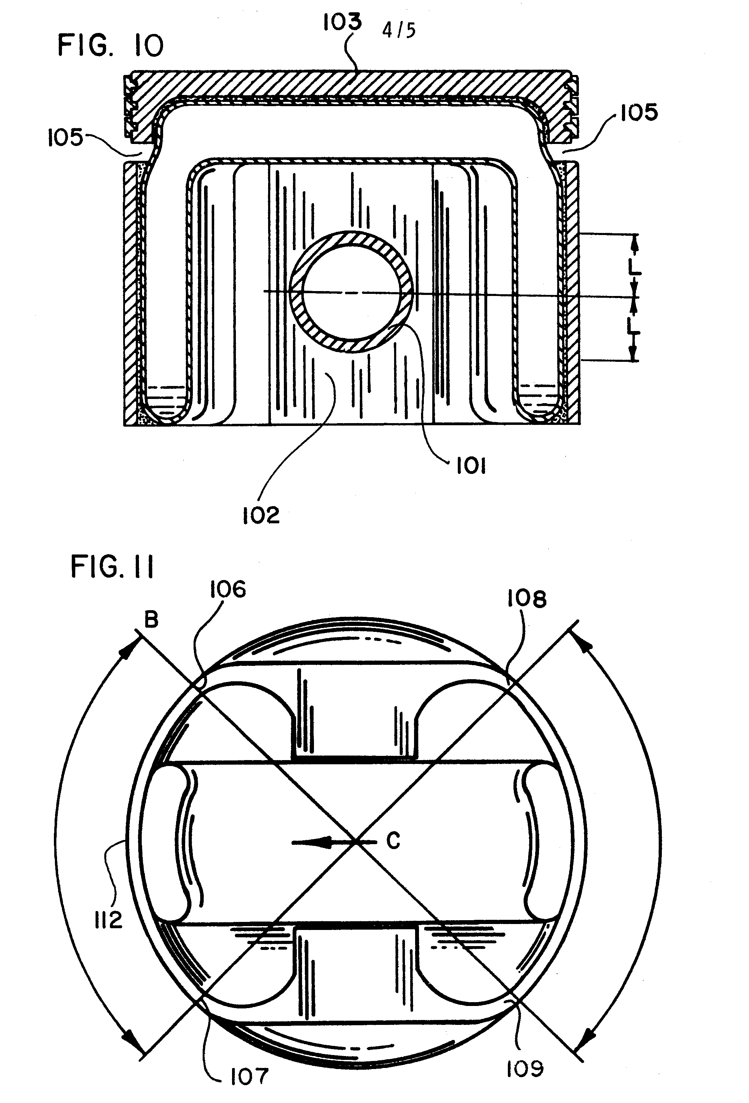

Figure 10 shows a central sectional view perpendicular to the wrist pin showing a piston which functions as a pivoted pad slider with enough flexibility of the piston skirts to conform to cylinder bore distortions. The piston is adapted within its cylinder to assure that thick films are established when the piston skirts are unloaded so that the piston skirt functions with the superposition of squeeze film and pivoted pad slider fluid mechanics.

Figure 11 is a bottom view of the piston of Figure 10 showing the flexible skirt design which conforms to cylinder wall distortions and maximizes squeeze film effects.

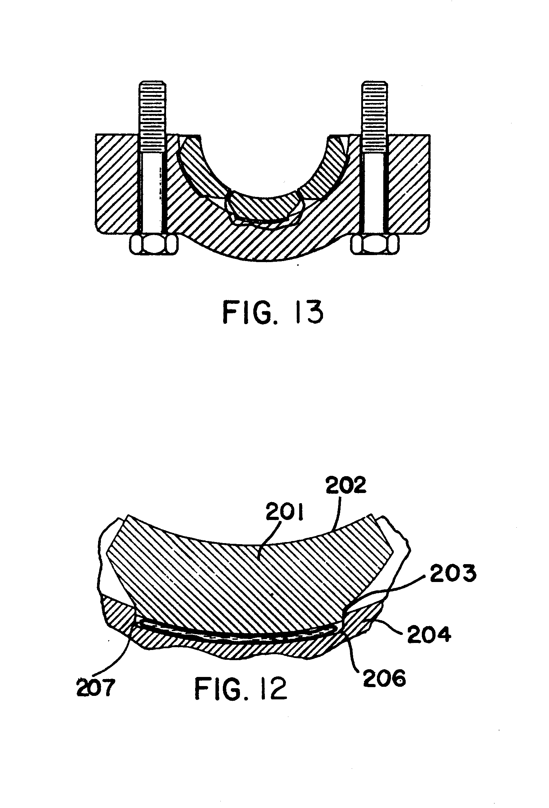

Figure 12 is a side view of a liquid-filled elastomerically supported pivoted pad slider bearing.

Figure 13 shows a side cutaway view of the pivoted pad of Figure 12 and the main bearing cap of an internal combustion engine where it would function with superposition of squeeze film and pivoted pad slider fluid mechanics.

DETAILED DISCUSSION

See Figure 1. A connecting rod 1 connects a wrist pin with center 10 and a journal bearing with center 5 in the well-known fashion. The journal bearing arrangement of the bearing centered on 5 is unconventional. Direct compression forces between point 5 and point 10 are borne by a hydrostatically supported pivoted pad slider 4 which has a journal contacting surface 4a. The radius of curvature of surface 4a is closely matched to, but very slightly larger than, the radius of curvature of the crankshaft. Holes communicating between surface 4a and 4b take oil under pressure from the wedge film in contact with surface 4a and supply pressurized oil to surface 4b. This pressurized oil acts to support pad surface 4b in the manner of a hydrostatic bearing so that a full oil film separates surface 4b from the corresponding surface of the connecting rod. The full film support of surface 4b means that pad 4 is free to pivot about virtual center point 4c. Pad 4 is a hydrostatically supported pivoted pad slider bearing. Referring again to Figure 1, the connecting rod 1 has a connecting rod cap 2 with a journal bearing contact surface 20. There is radial clearance between journal bearing surface 20 and the crankshaft journal matched to this connecting rod. The crankshaft journal is free to move a distance of .001 to .003 times the journal diameter within the connecting rod big end bearing assembly. Referring again to the geometry of pad 4 and the surrounding geometry of con rod 1, the clearance geometry between pad 4, the journal and the receiving surface of 4b in the con rod is denoted by the dashed lines. The clearance volumes 14 and 16 formed between these parts form oil reservoirs upstream and downstream of pad 4. These reservoirs assure that, during load reversal, the clearance between pad surface 4a and the journal is fully filled with oil. This oil between surface 4a and the crankshaft journal must be squeezed out as the crankshaft journal approaches pad surface 4a. The squeeze film forces generated in this way resist the approach of the surfaces and increase minimum oil film thicknesses. The thicker oil films reduce friction. It is the combination of a high load capacity pivoted pad slider, load reversal, and a means to assure flooding of the clearance between pad and journal during load reversal which produces the advantages of superposition of squeeze film and pivoted pad slider fluid mechanics. For the combination of squeeze film and pivoted pad slider fluid mechanics to be effective, the mechanical strength of the pivoted pad support structure must be great, and load reversal must be frequent. However, these conditions occur in a great many pieces of rotating or cyclically loaded machinery, and in these machines the superposition of squeeze film and pivoted pad slider fluid mechanics can greatly increase oil film stability and reduce friction.

With respect to the geometry of the connecting rod of Figures 1, 2 and 3, it should be noted that the oil film stability and effectiveness of the squeeze film and pivoted pad slider fluid mechanics depends greatly on geometrical details. For example, it is desirable that the crankshaft journal be free to move radially .001 times its diameter or more for this connecting rod. However, to maximize squeeze film forces the radius of curvature of surface 4a should be matched more closely than this to the radius of the crankshaft journal. Ideally, the radius of curvature of surface 4a should be larger than the radius of the journal by only the amount of the minimum film thickness expected. When this is done, the film stability of the pad functioning under steady conditions as a pivoted pad slider is maximized. The strength of the squeeze film forces are also much increased with this close matching of radius of curvature.

As the connecting rod of Figures 1, 2 and 3 functions, squeeze film effects will very much increase oil film thickness and reduce friction compared to what would occur if the squeeze film effects were not present. It should be noted that, since the crankshaft will move eccentrically with respect to the con rod big end bearing structure, the pad pivot required for a conventional pivoted pad is also the variable geometry feature required to produce the geometrical relation between sliding surfaces required to maximize squeeze film forces. As load is applied to pad 4, the thick oil film between pad 4 and the journal must be squeezed out. The oil resists this squeezing out with squeeze film pressure forces. These forces resist the approach of the surfaces and cause the oil film between the sliding surfaces to be thicker than it would be under steady state loading. Because the oil film is thicker, friction is reduced. Even at the lowest speeds of engine operation, the squeeze film effect will commonly more than double the oil film thickness and halve friction compared to what would occur without the squeeze film effect. At higher speeds the importance of the squeeze film effect increases. The more rapidly the bearing load is applied the more important the squeeze film effects become.

Figures 4, 5 and 6 show the arrangement and mounting of pad 4 in more detail. Figure 4 is an enlarged side cross section view of pad 4. Figure 5 is a view of pad 4 on surface 4a, its wedge film (journal contacting) side. Figure 6 is a view of pad 4 on surface 4b, the hydrostatically supported side. Figure 6 shows an arrangement of pressure distribution relief patchs 17 which distribute pressurized oil from holes 18 to larger areas of the hydrostatic pad. The hole and patch pattern produces hydrostatic pad lift-off and distributes pressure in the hydrostatic film between surface 4b and the corresponding closely matched surface in its receiver (in the case of

0128747

Figure 1, the con rod 1). Relief patches 17 are deep enough that they are negligibly restrictive compared to the restriction of the parallel surfaces 4a and the corresponding receiver surface. The pressure anywhere on a distribution patch 17 corresponds to the pressure in the corresponding hole 18.

It should be seen that each hole 18 picks up oil at the pressure corresponding to a particular area on the wedge film and supplies oil at this pressure (minus any losses at the entrance of hole 18 on the wedge side) to a particular area on the hydrostatic side of the pad. These input pressures from the patches determine the total pressure distribution in the hydrostatic film between surface 4b and the receiver surface. The patch and hole distribution is chosen so that the total pressure-generated force of the hydrostatic pad just balances the pressure-generated force of the wedge film at a thin hydrostatic film thickness. The pressure distribution in the hydrostatic film also adjusts itself so as to minimize bending forces and distortions of the pad.

The arrangement of wedge pressure supply holes 18 and distribution patches 17 should be such that the hydrostatic film pressures more than balance the forces on the wedge film if the hydrostatic film is too thin (generating forces to thicken the hydrostatic film) and so that pressure losses from the wedge film to patches 17 reduce the pressure in the hydrostatic film so that it is insufficient to balance the wedge film forces if the hydrostatic film is too thick. When this is arranged, the hydrostatic film will equilibrate to a thickness assuring film stability and zero static friction of the pad pivot, but at a film thickness small enough to minimize losses in wedge film load bearing capacity. Proper arrangement of pressure supply holes 18 and distribution patches 17 will assure this stability of the hydrostatic film over all conditions of bearing loading and bearing speed, since the proportional shape of the film pressure distribution in a pivoted pad wedge is constant for all speeds and loads.

The distribution of holes 18 and pressure distribution patches 17 shown in Figures 4, 5 and 6 is illustrative only. The pressure distribution of the hydrostatic film can be matched more closely to the pressure distribution in the wedge film as the number of distribution holes 18 are increased. The lift-off of the pad is more certain as the area of distribution patches 17 is increased. It can be shown mathematically that an innumerable number of combinations of pressure distribution holes 18 and distribution patches 17 can serve to produce a dynamically stable hydrostatically supported pivot.

If a pivoted pad is to support extremely heavy loads, distortions of the pad geometry must be held to very small values, since the film thicknesses for heavily loaded wedge films are extremely thin (frequently less than .0001 inch). It is, therefore, highly desirable to arrange the pressure distribution on the hydrostatic film so that it minimizes the bending forces which distort the pad.

The hydrostatically supported pivoted pad arrangement illustrated in Figures 1, 3, 4, 5 and 6 is mechanically very stiff and strong. It functions near optimally as a pivoted pad under steady state loading. The pivoting of pad 4 to establish a moment balance about virtual pivot point 4c also acts to orient pad surface 4a with respect to the crank journal surface in a way which maximizes squeeze film forces on the pad.

Figure 7, 8 and 9 illustrate a large connecting rod assembly analogous to that of Figure 1 to 3, but designed for a forging or metal stamping application. For such large scale applications, squeeze film fluid mechanics can enormously increase load bearing capacity and reduce friction.

It is worth reviewing here the relations between load bearing capacity squeeze film load force W and geometry. The bearings treated in the figures are curved journal bearings. The equations treating the curved journal bearing case can be obtained from pages 7-1 to 7-3 of Chapter 7, "Squeeze Films" of Standard Handbook of Lubrication Engineering, McGraw-Hill, O'Connor and Boyd, editors, 1968. The physical relations in the journal bearing case are close to those for parallel plates. For parallel plates with similar geometries, load bearing capacity is proportional to the fourth power of characteristic scale dimension, so that squeeze film forces increase very rapidly as the scale of the bearing increases. For a connecting rod bearing for a large forging press, a scaled up version of the arrangement of Figures 1 - 3 is illustrated in Figures 7, 8 and 9. This connecting rod should have bearing film strengths comparable to the strength of the supporting structures themselves.

The bearing should operate with very low friction. Figure 7 is a view analogous to Figure 1, with corresponding functions for corresponding parts. Figure 8 is a view analogous to Figure 2. Figure 9 is a view analogous to Figure 3.

A hydrostatically supported pivoted slider operating with cyclically applied loads and with an oil reservoir arrangement assuring oil film replenishment during load reversal will function effectively with superposition of squeeze film and pivoted pad slider fluid mechanics. The assembly will have very high load bearing capacity and reduced friction. Load reversal, and a means to assure oil film replenishment during load reversal, can produce the same advantageous superposition of squeeze film and pivoted pad fluid mechanics in other applications.

For example, Figure 10 shows a central sectional view perpendicular to the wrist pin showing a piston 110 which functions as a pivoted pad slider pivoting about the wrist pin with enough flexibility in the skirts to conform to cylinder bore distortions. The piston has means to assure that a full oil film is reestablished between each skirt and the cylinder wall during the period when the skirts are unloaded. The piston skirt arrangement shown in Figures 10 and 11 functions with superposition of squeeze film and pivoted pad slider fluid mechanics. The squeeze film effect produced by the combination of proper skirt pivoting and skirt conformability greatly increases oil film thickness and stability, and reduces friction.

Figure 10 shows a central sectional view perpendicular to the wrist pin showing the piston skirts in cross section. Wrist pin 101 rides on wrist pin boss 102 which is integrally connected to piston crown 103. The piston is equipped with fully hydrodynamic rings which are not the subject of the present case, but which permit the cylinder wall below the ring pack to be flooded with oil. It should be noted that directly above the piston skirts is a oil distribution groove 105 which functions as a reservoir to assure that an oil film is reestablished between skirt and cylinder wall during the unloaded part of the cycle for that skirt, so that an oil film for squeeze film purposes is reestablished every cycle. The piston skirts are cut away from the piston crown along arc B-B of Figure 11 with the cutaway illustrated in 105 of Figure 10. The piston skirts are flexible in bending, and take the predominant part of their load in circumferential compression. This permits the skirts to conform to cylinder wall distortions and maximize squeeze film forces. They are structurally connected to the wrist pin bosses so that they are stiffly constrained at edges 106, 107, 108, and 109. In operation of the piston, the radius of curvature of the piston skirts in the undeformed state will always be less than that of the cylinder wall (and there will always be room for the piston to move from side to side as the connecting rod moves and produces side loads on one skirt and then the other).

Referring to Figure 11, consider a condition when piston 110 is loaded with a force on the wrist pin in the direction C. Piston skirt surface 111 will engage the cylinder wall in squeeze film mode, with the initial forces centered on the piston skirt at 112. The changes in radius of curvature required to conform the skirt to the applied loads and maximize squeeze film forces are of the order of .003 times cylinder radius of curvature and less. With respect to distortions of this magnitude, the skirts are very flexible. The skirts will conform until the radial force is nearly constant circumferentially over the range of conformance required. This flexibility is exactly what is required to maximize both the squeeze film and pivoted pad slider bearing effectiveness of the piston skirts. The piston skirts are operated at all times in a flooded condition, where squeeze film effects are important. The piston skirts have connected to them a reservoir means 105 that assures that the oil film between skirt and cylinder wall is replenished during load reversal. The piston skirts are an example of a bearing with superposition of squeeze film and pivoted pad slider fluid mechanics, and are particularly an example of how bearing geometry can be made to elastically conform in a manner which increases load-bearing capacity and reduces friction.

Figures 12 and 13 illustrate another kind of pivoted pad arrangement where elasticity effects produce an improvement in load bearing capacity under squeeze film conditions. Figure 12 is a side view of a liquid filled elastomerically supported pivoted pad slider bearing well suited for reversing load applications. Metalic pad 201 is adapted to contact a journal bearing with journal contacting surface 202 and has support engaging geometry 203 which fits into an indentation and support structure 204. In the volume between pad 201 and support structure 204 is an elastomeric pad 206 which contains within itself a liquid filled bag 207. Because liquid filled elastomeric structure 206 and 207 has a high bulk modulus and is fully contained, this support structure is very strong with respect to direct compression from surface 202. However, the elastomeric pad structure is quite free to pivot for small angles and therefore forms a strong and stiff pad pivot structure. Because of the pressure equalization of the liquid in bag 207 the pressure distribution in the support structure 206, 207 will be different from the pressure distribution of the oil film contacting on surface 202. The pressure differential between the oil film and the elastomeric pad will tend to bend surface 202 in a manner reducing its radius of curvature. For machines subject to fully reversing fluctuating loads where squeeze film effects are important, this bending characteristic acts to maximize squeeze film effects by equalizing pressure around the pad circumference, and thus improves film stability and reduces friction.

Figure 13 illustrates three pivoted pads such as those shown in Figure 12 installed in a main bearing cap which might, for instance, be installed in an internal combustion engine. In a main bearing cap application, the loads are fully reversing so that the bending of the pad produces a desirable effect with respect to film stability.

The elastomerically supported pivoted pad may have many applications in reciprocating machinery subject to fluctuating loads besides engines. Particularly for large geometries where the nonlinear effects of squeeze film fluid mechanics become very important, it is expected that the elastomerically supported pivoted pad structure will form an inexpensive and robust pad support capable of bearing extremely heavy loads.

Many other applications of a mechanically stiff pivoted pad in a fluctuating load environment are possible which achieve superposition of squeeze film and pivoted pad action for increased load bearing capacity and reduced friction.

IT IS CLAIMED:

CLAIM 1

A hydrodynamic bearing assembly for operation in a machine which subjects the relatively sliding surfaces of said bearing to loads which fluctuate in magnitude and direction during the load cycle of said machine, wherein said bearing assembly comprises a pivoted pad slider bearing adapted to permit formation of an optimally shaped converging wedge oil film between two relatively sliding surfaces of roughly equal radius of curvature by permitting the sliding surface of the pivoting pad to tilt over a small range of angles about a pivot point or line so that the tilt angle between the pivoting pad surfaces and a surface sliding relatively to said pad surface establishes an oil wedge film pressure distribution having a moment balance about said pivot point or line,

the structural relations between said pivoting pad and its supporting structure being such that the oil wedge film supporting surface of said pivoted pad deforms so that this surface has radii of curvature under heavily loaded conditions which very nearly correspond on scales relevant to the hydrodynamic and hydrostatic fluid mechanics in the pivoted plane slider bearing to the radii of curvature of the relatively sliding surface which supports the other side of the oil film on which said bearing pad rides,

oil supply means in the bearing assembly fluid mechanically upstream of the relatively sliding surfaces to assure that said pivoted pad slider bearing operates fully flooded with lubricant,

whereby the fluctuating loads of the machine periodically reverse the load on said pivoted pad slider bearing surface and clearances in the bearing assembly permit the oil film between said pad and its relatively sliding surface to be substantially thickened during said period of reverse loading,

so that the interaction of the bearing parts and the lubricant is such that when the bearing pad is again placed under load during the load cycle of such machine, the relative approach of the surfaces separated by the oil film is strongly resisted by squeeze film pressures between these surfaces, at the same time that the wedge hydrodynamic fluid mechanics of quasi-statically loaded pivoted pad slider bearings acts, whereby the dynamic behavior of the bearing involves the superposition of squeeze film and pivoted pad slider bearing hydrodynamic effects.

CLAIM 2 A hydrodynamic bearing assembly for operation in a machine which subjects the relatively sliding surfaces of said bearing to loads which fluctuate in magnitude and direction during the load cycle of said machine, wherein said bearing assembly comprises a pivoted pad slider bearing adapted to permit formation of an optimally shaped converging wedge oil film between two relatively sliding surfaces of roughly equal radius of curvature by permitting the sliding surface of the pivoting pad to tilt over a small range of angles about a pivot point or line so that the tilt angle between the pivoting pad surfaces and a surface sliding relatively to said pad surface establishes an oil wedge film pressure distribution having a moment balance about said pivot point or line,

the structural relations between said pivoting pad and its supporting structure being such that the oil wedge film supporting surface of said pivoted pad deforms so that this surface has radii of curvature under heavily loaded conditions which very nearly correspond on scales relevant to the hydrodynamic and hydrostatic fluid mechanics in the pivoted plane slider bearing to the radii of curvature of the relatively sliding surface which supports the other side of the oil film on which said bearing pad rides,

clearance volumes in the bearing assembly fluid mechanically upstream of the relatively sliding surfaces providing lubricant reservoirs filled with lubricant to assure that said pivoted pad slider bearing operates fully flooded with lubricant,

whereby the fluctuating loads of the machine periodically reverse the load on said pivoted pad slider bearing surface and clearances in the bearing assembly permit the oil film between said pad and its relatively sliding surface to be substantially thickened during said period of reverse loading,

so that the interaction of the bearing parts and the lubricant is such that when the bearing pad is again placed under load during the load cycle of such machine, the relative approach of the surfaces separated by the oil film is strongly resisted by squeeze film pressures between these surfaces, at the same time that the wedge hydrodynamic fluid mechanics of quasi-statically loaded pivoted pad slider bearings acts, whereby the dynamic behavior of the bearing involves the superposition of squeeze film and pivoted pad slider bearing hydrodynamic effects.

CLAIM 3 The invention as set forth in Claim 1 and wherein the pivoted pad is hydrostatically supported.

CLAIM 4 The invention as set forth in Claim 1 and wherein the pivoted pad is elastomerically supported.

CLAIM 5 The invention as set forth in Claim 1 and wherein the pivoted pad is supported by a constrained liquid containing elastomeric pad.

CLAIM 6 The invention as stated in Claim 5 wherein the difference in pressures acting on the pivoted pad between its oil film surface and said liquid containing elastomeric pad produce bending moments which act to match the radii of curvature of said pad sliding surface to the relatively sliding surface to maximize the combined effects of squeeze film and pivoted pad slider fluid mechanics.

CLAIM 7 The invention as stated in Claim 1, wherein said pivoted pad surface is a section of the outer surface of a cylinder, wherein the surface sliding relatively to said pad is a cylindrical surface,

wherein said pad is connected to a crankpin linkage having a wrist pin and said pivot for said pad surface is the central axis of said wrist pin,

wherein the structural relations between the pivoted pad surface and its supporting structure supports said surface so that said surface is flexible in bending and strong in circumferential compression so that said pad surface deforms under load so that the axial and circumferential radii of curvature of said pad surface very nearly correspond on scales relevant to the hydrodynamic and hydrostatic fluid mechanics to the corresponding local radii of curvature of said relatively sliding cylindrical surface.

CLAIM 8 The invention as stated in Claim 1, wherin said pivoted pad surface is the outer surface of a piston skirt of a piston reciprocating in a cylinder, wherein said cylinder surface is the surface sliding relatively to said pad surface,

wherein said piston is connected to a crankpin linkage having a wrist pin and said pivot for said piston skirt surface is the central axis of said wrist pin,

wherein the structural relations between the pivoted pad piston skirt surface and its supporting structure in the piston make said surface flexible in bending and strong in circumferential compression so that said skirt surface deforms under load so that the axial and circumferential radii of curvature of said skirt surface very nearly correspond on scales relevant to the hydrodynamic and hydrostatic fluid mechanics to the corresponding local radii of curvature of said cylinder wall.

CLAIM 9 The invention as stated in Claim 2 and wherein the hydrostatic support of the pivoted pad comprises two curved hydrostatic film supporting surfaces separated by an oil film, where one of said hydrostatic surfaces is integral with the pivoting pad so that said pad sliding surface and said hydrostatic surface are connected by structural material, where said hydrostatic surface is connected to said pivoting pad surface by a multiplicity of holes through said material so that said holes supply  pressurized oil to said hydrostatic support oil film to maintain said film against the forces on said support structure.

CLAIM 10 The invention as stated in Claim 1 and wherein the environment of said pivoting pad is a connecting rod bearing of a reciprocating crankpin assembly.

CLAIM 11 The invention as stated in Claim 1 and wherein the environment of said pivoting pad is the main bearing cap of an internal combustion engine.

FIG. 3

10

1

14    4b    16

FIG. 3 →    FIG. 3 →

4    4a

4c

5

20    FIG. 1    2

FIG. 2

FIG. 6

17

17

4b

FIG. 4

18

18

FIG. 5

18

18

4a

2/5

0128747

**FIG. 9**

FIG.9

FIG.9

**FIG. 7**

**FIG. 8**

FIG. 10

103

105

105

101

102

FIG. 11

106

108

B

C

112

107

109

0128747

5/5

FIG. 13

FIG. 12